# EUROPÄISCHE PATENTANMELDUNG

(11) **EP 1 429 087 A1**
(43) Veröffentlichungstag der Anmeldung: **16.06.2004**
(21) Anmeldenummer: 02027565.7
(22) Anmeldetag: 09.12.2002
(51) Int. Cl.: F24H 9/02, F24D 11/00, F24D 10/00, F23B 1/00

(54) **Heizungsanlage für eine Mehrzahl Gebäude von denen jedes über einen eigenen, lokalen Warmwasser-Speicher verfügt**

(71) Anmelder: Aigner Josef Peter, 80335 München (DE)
(72) Erfinder: Aigner Josef Peter, 80335 München (DE)
(74) Vertreter: Szynka, Dirk

(57) **Zusammenfassung**

Die Erfindung betrifft eine Heizungsanlage für eine Mehrzahl Gebäude, bei der von der Heizung über Wärmeleitungen gelieferte Wärme über einen in jedem der Gebäude befindlichen Energiespeicher als Übergabestation auf einen Heizungskreislauf des jeweiligen Gebäudes übergeben wird und in dem Energiespeicher ein Intergralboiler für Brauchwasser integriert ist.

## Beschreibung

Die vorliegende Erfindung bezieht sich auf eine Heizungsanlage für eine Mehrzahl Gebäude.

Es ist an sich bekannt, nicht nur ein Gebäude, sondern eine Mehrzahl Gebäude über eine gemeinsame Heizungsanlage mit Wärme zu versorgen. Dies betrifft zum einen sog. Fernwärmesysteme, bei denen eine größere Zahl von Gebäuden, etwa ganze Stadtviertel, von einem gemeinsamen Fernwärmewerk versorgt werden, als auch sog. Nahwärmesysteme mit einer kleineren Gebäudezahl. In beiden Fällen wird eine gemeinsame Heizung als Wärmequelle verwendet, wobei diese Heizung gleichzeitig auch andere Funktionen haben kann. Es kann sich also beispielsweise um die Abwärmenutzung bei einem Kraftwerk (Kraftwärmekopplung) oder bei einer Industrieanlage, einer Müllverbrennungsanlage, einer Abwärmenutzung aus der Natur (Bodenwärme) und dgl. mehr handeln. Der Begriff "Heizung" meint hier also eine technisch erschlossene Wärmequelle im allgemeinsten Sinn.

Häufig werden zwischen den von der Heizung kommenden Wärmeleitungen und den jeweiligen Heizungskreisläufen der Gebäude sog. Übergabestationen eingesetzt, d.h. die beiden Leitungssysteme hinsichtlich des Leitungsmediums trennende Wärmetauscher. Dies erlaubt insbesondere, Heizungskreisläufe einzelner Gebäude wegen Montage- oder Reparaturarbeiten außer Betrieb zu nehmen, ohne die gesamte Heizungsanlage, also das gesamte Fernwärmenetz oder Nahwärmenetz oder dergleichen, dadurch zu stören. Erleichtert wird auch das Hinzufügen oder Wegnehmen zu heizender Gebäude zu bzw. von dem Netz.

Der vorliegenden Erfindung liegt das technische Problem zugrunde, eine neue und vorteilhafte Heizungsanlage zum Heizen einer Mehrzahl Gebäude anzugeben.

Die Erfindung richtet sich auf eine Heizungsanlage für eine Mehrzahl Gebäude mit einer Heizung als Wärmequelle, einem Energiespeicher pro Gebäude, der von der Heizung über Wärmeleitungen mit Wärme versorgt werden kann, einem Heizungskreislauf pro Gebäude, der von dem Energiespeicher mit Wärme versorgt werden kann, und einem Integralboiler für warmes Brauchwasser pro Gebäude, der in den Energiespeicher integriert ist.

Vorteilhafte Ausgestaltungen sind in den abhängigen Ansprüchen sowie der folgenden Beschreibung angegeben.

Daneben richtet sich die Erfindung aber auch auf ein Verfahren zum Herstellen einer solchen Heizungsanlage. Die folgende Offenbarung ist sowohl im Hinblick auf den Vorrichtungscharakter als auch im Hinblick auf den Verfahrenscharakter der Erfindung zu verstehen. Dies betrifft zum einen die Herstellung der Heizungsanlage, als auch den Betrieb der Heizungsanlage.

Die Erfindung sieht also vor, die Übergabestation, in der die über die Wärmeleitungen von der Heizung herantransportierte Wärme auf den Heizungskreislauf des Gebäudes übergeben wird, als Energiespeicher vorzusehen, der einen Integralboiler für warmes Brauchwasser enthält. Im Gegensatz dazu wurden in konventioneller Weise als Übergabestationen einfache Plattenwärmetauscher verwendet, die keinen wesentlichen Energieinhalt aufweisen und insbesondere kein warmes Brauchwasser liefern konnten. Stattdessen wurde das Brauchwasser in einem separaten Brauchwasserboiler erwärmt, der über Wärmeleitungen an dem Plattenwärmetauscher angeschlossen war.

Neben einer technischen Vereinfachung des Gesamtaufbaus erzielt die Erfindung somit insbesondere den Vorteil, dass die Brauchwasserversorgung in dem Gebäude nicht davon abhängt, ob eine in den Wärmeleitungsanschluss zwischen einen konventionellen Plattenwärmetauscher und einen konventionellen Boiler geschaltete Pumpe arbeitet oder nicht. Im Falle eines Stromausfalls oder eines Pumpendefekts bleibt somit der erfindungsgemäße Integralboiler in dem Energiespeicher warm. Solange also durch den Leitungsdruck in dem Brauchwassersystem ein ausreichender Wassertransport stattfindet, ist die Entnahme warmen Brauchwassers jedenfalls so lange gewährleistet, wie der Energiespeicher warm bleibt. Sollte der Ausfall nur die gebäudeseitige Technik betreffen, wird der Energiespeicher über die Wärmeleitungen weiterhin gewärmt, so dass die Brauchwasserversorgung überhaupt gewährleistet ist. Sollte ein Gesamtstromausfall vorliegen, kann immerhin die in dem Energiespeicher gespeicherte Wärmemenge über das Brauchwasser entnommen werden.

Wenn die Energiespeicherkapazität ausreichend groß ist, gelten im übrigen ähnliche Vorteile für die Gebäudeheizung an sich. Mit ausreichender Konvektion in dem Heizungskreislauf kann das Gebäude weiterhin versorgt werden, so lange der Energiespeicher warm bleibt. Zwar war dies mit einem konventionellen Plattenwärmetauscher dann auch möglich, wenn die Wärmezufuhr zu dem Plattenwärmetauscher aufrechterhalten wurde. Jedoch verfügt der erfindungsgemäße Energiespeicher für den Fall eines Ausfalls des Wärmetransports zu der Übergabestation über einen vergleichsweise größeren Wärmeinhalt und kann, je nach Auslegung und Bedarf, dann neben der Brauchwassererwärmung auch weiterhin für eine gewisse Zeit die Gebäudeheizung sicherstellen. So könnten kurzfristige Unterbrechungen eines Nah- oder Fernwärmenetzes durch den gebäudeseitigen Energiespeicher abgepuffert werden. Insbesondere kann die gebäudeseitige Technik darauf eingestellt werden, ob die Brauchwasserversorgung oder die Heizungsversorgung Vorrang hat.

Die Erfindung richtet sich aber auch gleichermaßen auf Fälle, in denen der Wärmeinhalt des Energiespeichers zum Heizen des Gebäudes nicht ausreicht, jedoch eine Sicherstellung der Brauchwassererwärmung für eine gewisse Zeit gewährleistet.

Bevorzugt ist die Anwendung der erfindungsgemäßen Heizungsanlage bei Nahwärmesystemen. Darunter werden hier insbesondere Heizungsanlagen mit mindestens 2, vorzugsweise mindestens 5 und höchstens 50, besser höchstens 40 und günstigsterweise höchstens 30 Gebäuden verstanden.

Ferner ist vorzugsweise eine Biomasseheizung vorgesehen, also eine zum Verbrennen fester Biomassebrennstoffe ausgelegte Heizung als Wärmequelle. In Betracht kommen insbesondere Holzscheite, Hackschnitzel, Pellets und dgl.

Die Erfindung betrifft dabei insbesondere eine auf feste Biomassebrennstoffe ausgelegte Gebäudeheizung, und zwar sowohl für ein einzelnes als auch für eine Mehrzahl Gebäude, die in einem Heizungsgehäuse im Boden außerhalb des zu heizenden Gebäudes vergraben ist. Damit lässt sich die erfindungsgemäße Heizung in besonders einfacher Weise bei bestehenden Gebäuden nachrüsten, ohne auf das Platzangebot und die Zugänglichkeit entsprechender Räume in dem Gebäude Rücksicht nehmen zu müssen. Stattdessen verfügt die Heizung über ein eigenes Gehäuse, das sich im Boden vergraben lässt und die Heizung in geeigneter Weise vor schädlichen Einflüssen aus dem Boden schützt. Andererseits ist die Heizung für feste Biomassebrennstoffe ausgelegt, die sowohl in ökologischer Hinsicht als auch - je nach Versorgungslage - in ökonomischer Hinsicht eine sehr attraktive Alternative zu fossilen Energieträgern bieten. Die Erfindung ermöglicht somit die nachträgliche Ausrüstung von Gebäuden mit einer vorteilhaften modernen Heizung.

Daneben lässt sich die Heizung, wenn dies von Interesse ist, bereits bei der Herstellung im Werk in dem Heizungsgehäuse vormontieren und als im wesentlichen vorgefertigte Einheit zu dem Gebäude transportieren, so dass die Montagezeit vor Ort auf ein Minimum begrenzt werden kann. Insbesondere können standardisierte Heizungen in standardisierten Gehäusen angeboten werden und damit durch eine Serienfertigung Preisvorteile erzielt werden.

Schließlich eignet sich gerade eine für Biomassebrennstoffe ausgelegte Heizung besonders für einen Betrieb außerhalb eines Gebäudes, weil der notwendige Brennstoffvorratsspeicher ohne Belegung eines großen Raumes in dem Gebäude in der Nähe der Heizung vorgesehen werden kann. Damit lässt sich die Heizung in komfortabler Weise mit Brennstoff befüllen bzw. lässt sich leicht eine automatische Befüllung der Heizung mit dem Brennstoff vorsehen.

Bevorzugt ist insbesondere, dass das Heizungsgehäuse ein standardisierter Container ist, wie er zu Transportzwecken üblich und zu geringen Kosten verfügbar ist. Solche Container können insbesondere aus Metall und/oder Kunststoff bestehen. Erfindungsgemäß kommen jedoch auch andere Heizungsgehäuse, etwa einer Fertiggarage ähnliche leichte und transportable Betonkonstruktionen und dgl., in Betracht. Auch diese lassen sich bei Bedarf mit vormontierter Heizung zum Einsatzort transportieren.

Insbesondere ist bevorzugt, dass der Brennstoffvorratsspeicher in dem Heizungsgehäuse, also vorzugsweise in dem Container, integriert ist. Damit erübrigt sich eine separate Lösung und erleichtert sich die Nachfüllung der Heizung bzw. die Konstruktion einer automatischen Heizungsbefüllung.

Der in dem Heizungsgehäuse integrierte Brennstoffvorratsspeicher kann über eine Schüttöffnung in einer Oberseite des Heizungsgehäuses verfügen, so dass der Speicher beispielsweise durch einfaches Abkippen von einem Fahrzeug leicht nachgefüllt werden kann. Dabei sollte die Schüttöffnung für den Brennstoffvorratsspeicher möglichst gut zugänglich sein, damit sie beispielsweise gegenüber dem Einbringen von festen Brennstoffen in ein Gebäude, wie man dies von früheren Kohleheizungen in Form des Einschaufelns von Kohle von der Straße in den Keller kennt, eine Erleichterung bietet.

Der Brennstoffvorratsspeicher kann ferner ein Bodenrührwerk aufweisen, mit dem der Brennstoff durch einen Trichter weiter transportiert werden kann, um von einer motorischen Transporteinrichtung zur Verbrennung transportiert zu werden. Bei dieser motorischen Transporteinrichtung kann es sich beispielsweise um eine Transportschnecke oder einen motorischen Schieber handeln.

Ferner kann die Heizung in dem Heizungsgehäuse auch über weitere motorische Einrichtungen wie einen Aschelift zum Entfernen von Verbrennungsrückständen verfügen.

Weiterhin ist es bevorzugt, dass das Heizungsgehäuse mit der darin angebrachten Heizung ganz, d.h. mit sämtlichen Seitenwänden, im Boden eingegraben ist. Grundsätzlich zielt die Erfindung darauf ab, eine leichte Zugänglichkeit der Heizung und insbesondere des Brennstoffvorratsspeichers durch Eingraben zu erzielen. Bei Bedarf könnte die Oberseite des Heizungsgehäuses auch in anderer Weise nutzbar sein, beispielsweise befahrbar sein, als Parkplatz dienen und ähnliches, solange die Zugänglichkeit für das Nachfüllen von Brennstoff gegeben ist. Im Fall von Hanglagen kann es dabei sinnvoll sein, das Heizungsgehäuse nur mit einer oder einem Teil der Seitenwände einzugraben. Bevorzugt ist jedoch, dass nicht nur eine, sondern vorzugsweise zwei, günstigerweise drei und im besonders bevorzugten Fall alle Seitenwände des Heizungsgehäuses eingegraben sind. Dabei muss die jeweilige Seitenwand nicht notwendigerweise bis zur Oberseite eingegraben sein, wenngleich dies bevorzugt ist.

Der erfindungsgemäße Integralboiler ist vorteilhafterweise als Spiralrohrboiler ausgebildet. Insbesondere kann es sich bei dem Energiespeicher um einen Warmwassertank handeln, in dem ein Spiralrohrwärmetauscher als Integralboiler vorgesehen ist. Der Integralboiler erstreckt sich dabei vorzugsweise über im wesentlichen die gesamte Höhe des Energiespeichers. Wenn dabei eine insgesamt von unten nach oben führende Strömungsrichtung durch den Integralboiler vorgesehen ist, kann eine ausreichende Brauchwassertemperatur auch dann noch gewährleistet werden, wenn der Energieinhalt des Energiespeichers schon teilweise erschöpft ist. Aufgrund der Wärmeschichtung bleibt nämlich der oberste Bereich des Energiespeichers längere Zeit warm.

Auch der die Wärmeleitungen der Heizung an den Energiespeicher ankoppelnde Wärmetauscher ist vorteilhafterweise ein Spiralwärmetauscher. Vorzugsweise ist er im unteren Bereich des Energiespeichers vorgesehen.

Im Folgenden wird die Erfindung anhand eines Ausführungsbeispiels näher erläutert, wobei dabei offenbarte Einzelmerkmale auch in anderen Kombinationen erfindungswesentlich sein können und nicht im Einzelnen zwischen Verfahrens- und Vorrichtungsaspekten der Erfindung unterschieden wird.

Im Einzelnen zeigt:
- Fig. 1: eine schematische Seitenansicht einer erfindungsgemäßen Heizung in einem Container;
- Fig. 2: eine schematische Seitenansicht eines eingegrabenen Containers mit einer erfindungsgemäßen Heizung gemäß einer ersten Variante;
- Fig. 3: eine schematische Seitenansicht eines eingegrabenen Containers mit einer erfindungsgemäßen Heizung gemäß einer zweiten Variante;
- Fig. 4: eine schematische Draufsicht auf einen Container mit einer erfindungsgemäßen Heizung gemäß einer dritten Variante;
- Fig. 5: eine schematische Draufsicht auf einen Container mit einer erfindungsgemäßen Heizung gemäß einer vierten Variante;
- Fig. 6: eine schematische Darstellung eines Ausschnitts aus einer erfindungsgemäßen Heizungsanlage mit einem Energiespeicher;
- Fig. 7: eine Aufrissdarstellung einer beispielhaften Bauform eines erfindungsgemäßen Energiespeichers.

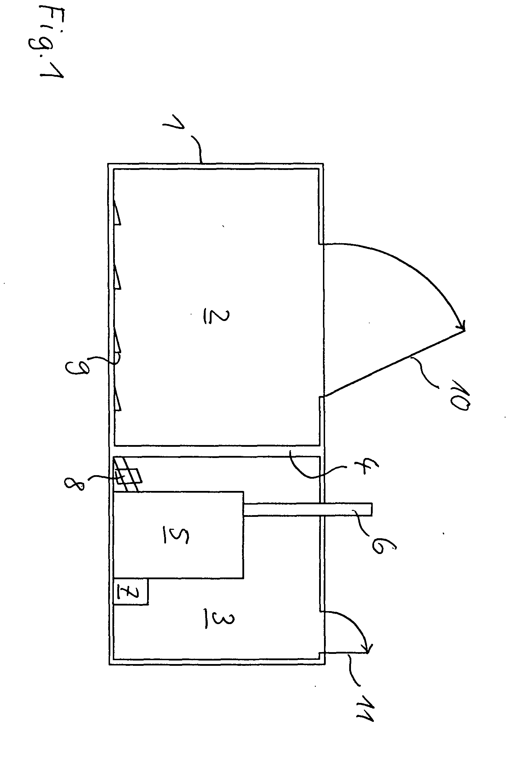

Fig. 1 zeigt einen Container 1 als Heizungsgehäuse, der durch eine Trennwand 4 in einen Vorratsspeicher 2 und in einen Heizraum 3 unterteilt ist. In dem Heizraum 3 befindet sich ein Heizkessel 5 mit einem Rauchrohr 6 und einem Aschebehälter 7. Dem Heizkessel 5 kann durch eine motorische Transporteinrichtung 8 mit Rückbrandsicherung fester Biomassebrennstoff in Form von Hackschnitzeln zugeführt werden. Die Hackschnitzel werden von einer hier nur schematisch angedeuteten Transporteinrichtung 9 aus dem Vorratsspeicher 2 angeliefert. Der Vorratsspeicher 2 ist durch eine oben liegende Klappe 10 von der Oberseite des Containers 1 aus zugänglich. Nach Öffnen der Klappe 10 kann der Vorratsspeicher 2 neu mit Hackschnitzeln befüllt werden. Insgesamt enthält der Container 1 also eine Heizung mit einem in dem Vorratsspeicher 2 vorgesehenen und im weiteren noch näher beschriebenen Brennstoffvorratsspeicher. Es handelt sich dabei um einen Container gemäß internationalem Standard mit beispielhaften Abmessungen von 20 Fuß oder 40 Fuß, je nach Größe der Heizung und des Brennstoffvorratsspeichers. Der Container 1 besteht aus abgedichteten und korrosionsgeschützten Metallwänden und ist insgesamt einschließlich der eingebauten Heizung wie ein gewöhnlicher Transportcontainer mit einem LKW, mit der Bahn oder in anderer Weise transportabel. Das Bezugszeichen 11 zeigt eine Klappe, mit der eine Einstiegsöffnung in den Heizraum 3 geöffnet werden kann, um dort Wartungsarbeiten vorzunehmen oder Asche aus dem Aschebehälter 7 zu entnehmen. Es kann auch ein hier nicht näher dargestellter Aschelift zur Entnahme der Asche über dem Container 1 vorgesehen sein.

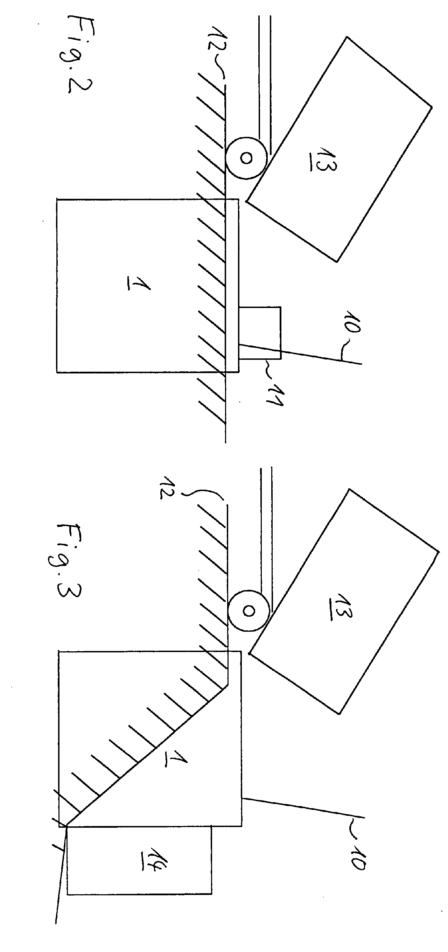

Fig. 2 zeigt den im Boden unterhalb der mit 11 bezeichneten Bodenoberfläche eingebauten Container 1 mit geöffneter Klappe 10. Im linken oberen Bereich der Fig. 2 ist schematisch ein Traktoranhänger 13 eines Landwirts dargestellt, mit dem ein Hackschnitzelvorrat in den Vorratsspeicher 2 abgekippt wird. Dabei kann der Traktoranhänger 13 direkt bis an den Container 1 gefahren werden und infolge der eingegrabenen Position desselben ohne weitere Maßnahmen bei aufgeklappter Klappe 10 über der Einfüllöffnung abgekippt werden. Ansonsten ist die Klappe 10 in geschlossenem Zustand begehbar und kann bei Bedarf auch befahrbar ausgestaltet werden, um die Oberseite des Containers 1 beispielsweise als Parkfläche nutzen zu können.

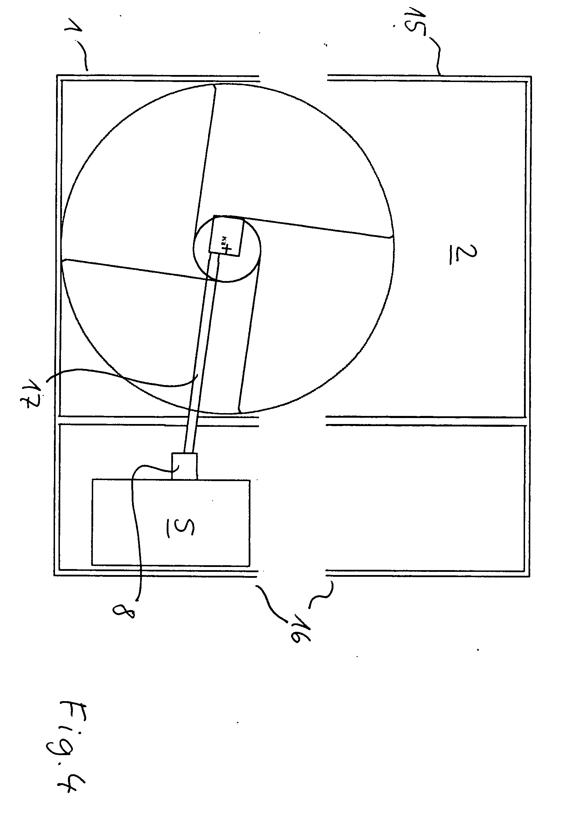

Fig. 3 zeigt eine analoge Situation, wobei jedoch der Container 1 an einem Hang eingegraben ist. Daher ist nur die in Fig. 3 linke Seitenfläche des Containers 1 vollständig eingegraben und die im Sinn der Fig. 3 vordere und hintere Seitenfläche des Containers 1, der eine Quaderform aufweist, teilweise eingegraben. An der in Fig. 3 rechten Seitenfläche des Containers 1, die nicht eingegraben ist, befindet sich eine in Fig. 3 offen stehende Zugangstür 14, die die Klappe 11 aus Fig. 1 ersetzt und einen Zugang zu dem Heizraum 3 erlaubt.

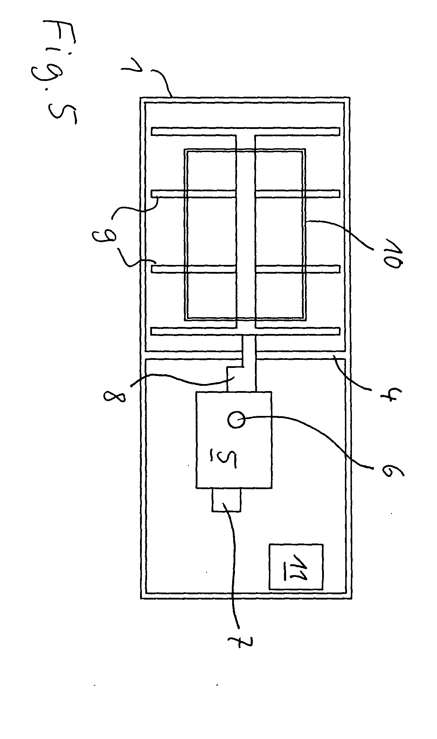

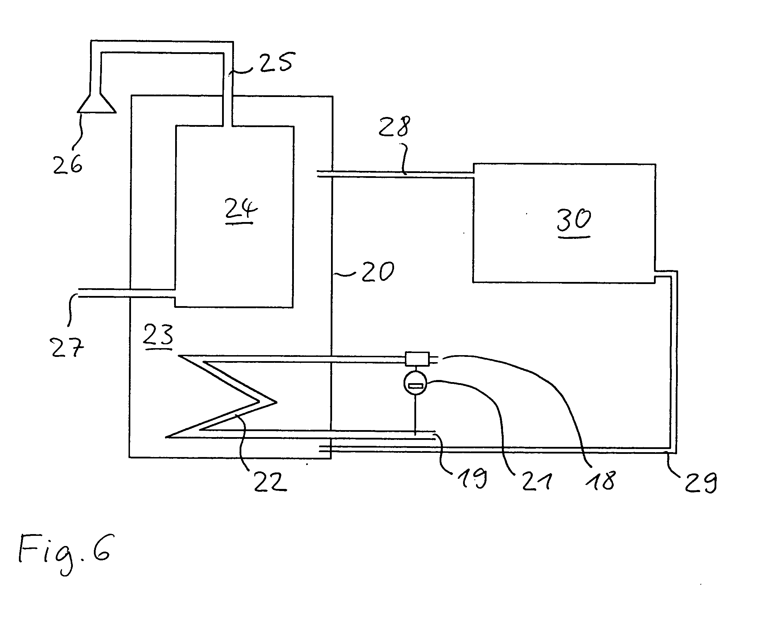

Fig. 4 zeigt eine Variante zu dem Container aus Fig. 3 in einer schematisierten Draufsicht. Dabei sind identische Bestandteile mit den gleichen Bezugsziffern bezeichnet. 15 bezeichnet einen zweiten Container, der mit dem ersten Container 1 seitlich zusammengefügt wird, um zusätzliche Lagerkapazität in dem Vorratsspeicher 2 zu schaffen. Zur Verdeutlichung sind die beiden Container 1 und 15 getrennt dargestellt, wobei die entsprechende Verbindungsfuge 16 tatsächlich dicht geschlossen ist. Der Vorratsspeicher 2 enthält ein Bodenrührwerk 17, das die Hackschnitzel aus dem Vorratsspeicher 2 durch einen darunter liegenden und nicht eingezeichneten Trichter der in Fig. 4 nicht, jedoch in Fig. 1 andeutungsweise eingezeichneten und im Folgenden noch anhand von Fig. 5 näher erläuterten Transporteinrichtung 9 zuführt.

Fig. 5 zeigt eine Draufsicht auf eine weitere Variante des Containers 1, die sich von der Variante aus Fig. 4 zunächst dadurch unterscheidet, dass hier nur ein einzelner Container 1, also keine Erweiterung durch einen zweiten Container 15 vorgesehen ist. Im Übrigen zeigt die Draufsicht die Klappe 10 zum Verschließen und Öffnen der Einfüllöffnung zu dem Vorratsspeicher 2 und die in dem Vorratsspeicher 2 unter einem Bodenrührwerk gemäß Fig. 4 (jedoch in kleineren Abmessungen) angeordnete Transporteinrichtung 9. Diese besteht aus einer Anzahl paralleler Schieber, die durch eine iterative Bewegung in der horizontalen Richtung der Fig. 5 bei gleichzeitiger vertikaler Auf- und Abbewegung die herabgefallenen Hackschnitzel nach und nach von links nach rechts befördern. Die Transportbewergung erfolgt also durch von links nach rechts Bewegen der Schieber der Transporteinrichtung 9, Anheben, von rechts nach links Zurückbewegen, wieder Absetzen und wieder erneutes von links nach rechts Bewegen. Im rechten Bereich des Vorratsspeichers 2 werden die Hackschnitzel zunächst von einem Schneckenantrieb mit beidseits gegensinnigen Schnecken (nicht gezeichnet) der bereits erwähnten Transporteinrichtung 8 und durch diese dem Heizkessel 5 zugeführt.

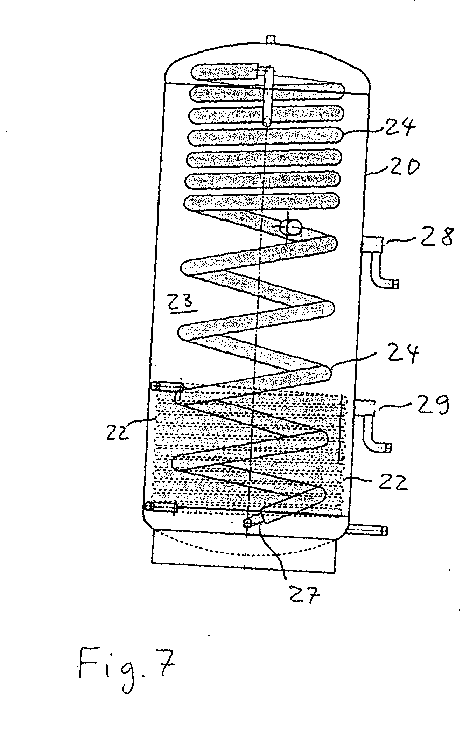

Fig. 6 veranschaulicht den Anschluss der in den Fig. 1 bis 5 erläuterten Heizung an das zu heizende Gebäude. Insgesamt handelt es sich um ein Nahwärmeversorgungsnetz als erfindungsgemäße Heizungsanlage. Hier sind mit 18 und 19 die Wärmeleitungen bezeichnet, die von einer gemäß den Fig. 1 bis 5 ausgestalteten Heizung in der Heizungsanlage Wärme zu einer als Energiespeicher 20 ausgebildeten Übergabestation transportieren. Mit 21 ist ein konventioneller Wärmemengenzähler bezeichnet, der den Verbrauch des über den Energiespeicher 20 als Übergabestation angeschlossenen Gebäudes erfasst.

Der Energiespeicher 20 besteht zunächst aus einem aufrechten und in der aufrechten Richtung langgestreckten Wasserspeicher, in dem ein Spiralwärmetauscher 22 zur Abgabe von den Wärmeleitungen 18 und 19 herantransportierten Wärme dient. Der Spiralwärmetauscher 22 erwärmt also das hier mit 23 bezeichnete Wasser in dem Energiespeicher 20 insgesamt.

Fig. 6 zeigt schematisch einen Integralboiler 24, der sich jedoch tatsächlich, wie Fig. 7 näher verdeutlicht, über praktisch die gesamte Höhe des Energiespeichers 20 erstreckt. Der Integralboiler 24 ist an das Brauchwassersystem 25 des Gebäudes angeschlossen, das hier schematisch durch einen Duschkopf 26 symbolisiert ist. Frischwasser erhält der Integralboiler über einen Frischwasserzulauf 27.

Ferner ist an den Energiespeicher 20 ein Heizungskreislauf 28, 29 mit einem beispielhaften Heizkörper 30 in dem Gebäude angeschlossen. Durch den Heizungskreislauf 28, 29, 30 zirkuliert das bereits erwähnte erwärmte Wasser 23 in dem Energiespeicher 20.

Wenn ein Stromausfall eintritt, so bleibt das in dem Integralboiler 24 befindliche Wasser auch bei Frischwasserzufuhr durch den Anschluss 27 so lange erwärmt, wie das in dem Energiespeicher 20 vorhandene Wasser 23 erwärmt ist. Solange also durch den Frischwasserdruck aus dem Anschluss 27 auch unabhängig von einem Pumpenbetrieb ein ausreichender Wasserdruck zur Verfügung gestellt wird, ist die Brauchwasserversorgung des Gebäudes stromunabhängig. Bei Gewährleistung der Wärmezufuhr durch die Wärmeleitungen 18 und 19 gilt dies grundsätzlich, bei Zusammenbruch der Wärmeversorgung in diesen Leitungen jedenfalls so lange, wie der Energiespeicher 20 bzw. das darin befindliche Wasser 23 auf Temperatur bleibt. Dies kann bei Stromausfall dadurch gewährleistet werden, dass die Zirkulation durch den Heizungskreislauf 28, 29, 30 infolge Pumpenausfalls und mangelhafter Konvektion oder auch durch Abschalten des Heizungskreislaufs unterbleibt und somit die Energie in dem Energiespeicher 20 nur noch über Brauchwasser entnommen werden kann. Es ist jedoch auch möglich, den Energieinhalt des Energiespeichers 20 sowohl der Brauchwasserversorgung als auch der Heizung zur Verfügung zu stellen. Im wesentlichen hängt dies von der Kapazität des Energiespeichers 20 ab. In vielen Fällen wird man sich wegen der ohnehin für die Gebäudeheizung zu geringen Kapazität auf das Brauchwasser beschränken.

Fig. 7 zeigt den Energiespeicher 20 in einer beispielhaften Ausgestaltung.

Man erkennt dabei insbesondere, dass sich der Spiralwärmetauscher 24 tatsächlich über praktisch die gesamte Bauhöhe des Energiespeichers 20 erstreckt und dabei im oberen Drittel eine engere Spiralwindung aufweist. Ferner erkennt man, dass der Spiralwärmetauscher 22 im unteren Bereich des Energiespeichers 20 angeordnet ist, um eine maximale Temperaturdifferenz zu dem Wasserinhalt des Energiespeichers 20 zu gewährleisten.

Die Heizungsanlage dieses Ausführungsbeispiels weist zumindest eine Heizung gemäß den Fig. 1 bis 5 und zumindest zwei Energiespeicher gemäß den Fig. 6 und 7 für zumindest zwei zu heizende Gebäude auf.

Insgesamt bietet die Erfindung eine sehr vorteilhafte Unterbringung einer Heizung mit wesentlichen ökologischen und auch ökonomischen Vorteilen im Rahmen eines Nahwärmesystems bei in Bezug auf die Brauchwasserversorgung vorteilhafter Ankopplung an die gebäudeseitige Heizungs- und Brauchwasserversorgung über eine als Energiespeicher ausgebildete Übergabestation. Die Heizung lässt sich in einfacher Weise beispielsweise von lokal ansässigen Landwirten mit Biomassebrennstoff beliefern, die diesen insbesondere direkt in eine Einfüllöffnung mit einem LKW, Traktoranhänger oder dgl. abkippen können.

## Patentansprüche

1. Heizungsanlage für eine Mehrzahl Gebäude mit
einer Heizung(1-11, 14-17) als Wärmequelle,
einem Energiespeicher (20, 23) pro Gebäude, der von der Heizung (1-11, 14-17) über Wärmeleitungen (18, 19) mit Wärme versorgt werden kann,
einem Heizungskreislauf (28-30) pro Gebäude, der von dem Energiespeicher (20, 23) mit Wärme versorgt werden kann, und
einem Integralboiler (24) für warmes Brauchwasser pro Gebäude, der in den Energiespeicher (20, 23) integriert ist.

2. Heizungsanlage nach Anspruch 1 als Nahwärme-Heizungsanlage für eine Zahl von mindestens 2, vorzugsweise mindestens 5 und höchstens 50, besser höchstens 40 und günstigsterweise höchstens 30 Gebäuden.

3. Heizungsanlage nach Anspruch 1 oder 2, bei der die Heizung (1-11, 14-17) zum Verbrennen fester Biomassebrennstoffe ausgelegt ist.

4. Heizungsanlage nach einem der vorstehenden Ansprüche, bei der die Heizung (1-11, 14-17) in ein Heizungsgehäuse (1, 15) eingebaut ist,
wobei das Heizungsgehäuse (1, 15) außerhalb der zu heizenden Gebäude im Boden (12) eingegraben ist.

5. Heizungsanlage nach einem der vorstehenden Ansprüche, bei der der Integralboiler (24) ein Spiralrohrboiler in dem Energiespeicher (20, 23) ist.

6. Heizungsanlage nach Anspruch 5, bei der sich der Spiralrohrboiler (24) im wesentlichen über die gesamte Höhe des Energiespeichers (20, 23) erstreckt.

7. Heizungsanlage nach einem der vorstehenden Ansprüche, bei der der Energiespeicher (20, 23) einen Spiralwärmetauscher (22) aufweist, an den die Wärmeleitungen (18, 19) der Heizung (1-11, 14-17) angeschlossen sind.

8. Verfahren zum Herstellen einer Heizungsanlage nach einem der vorstehenden Ansprüche, das den Schritt beinhaltet, die Heizung (1-11, 14-17) in dem Heizungsgehäuse (1, 15) außerhalb des oder der zu heizenden Gebäude im Boden (12) einzugraben.
